## Europäisches Patentamt
## European Patent Office
## Office européen des brevets

(11) Publication number: **0 142 927**
**A2**

(12) # EUROPEAN PATENT APPLICATION

(21) Application number: **84306710.9**

(22) Date of filing: **02.10.84**

(51) Int. Cl.⁴: **G 11 B 7/24**

(30) Priority: **24.11.83 CA 441896**

(43) Date of publication of application:
**29.05.85 Bulletin 85/22**

(84) Designated Contracting States:
**DE FR GB IT NL**

(71) Applicant: **NORTHERN TELECOM LIMITED**
**1600 Dorchester Boulevard West**
**Montreal Quebec H3H 1R1(CA)**

(72) Inventor: **Balston, Neil Keith**
**3899 Richmond Road**
**Nepean Ontario, K2H 8T8(CA)**

(72) Inventor: **Anderson, Keith Douglas**
**PH16-2881 Richmond Road**
**Ottawa Ontario, K2B 8J5(CA)**

(72) Inventor: **Willemsen, Herman William**
**300 Beverly Street**
**Stittsville Ontario, KOA 3GO(CA)**

(74) Representative: **Crawford, Andrew Birkby et al,**
**A.A. THORNTON & CO. Northumberland House 303-306**
**High Holborn**
**London WC1V 7LE(GB)**

(54) **Optical disc.**

(57) An optical disc for use in optical memories has a memory data recording surface 16 overlain by a protective cover 14 to protect it from dust and contaminants. Position related data is recorded on the outer surface 24 of the cover 14 in a more gross and less densely packed format than is the memory data on the memory recording surface 16. By removing the positional data from the memory recording surface 16, (i) more space is made available on the memory recording surface and (ii) the positional data is more easily read by a moving position scanning beam.

FIG. I

EP 0 142 927 A2

# OPTICAL DISC

0142927

This invention relates to optical or video discs and particularly to such discs for use in optical memories.

Analogous in some respects to the familiar audio disc, information on an optical or video disc is stored on the disc surface as pits of approximately 1 micron across, the pits located along a single spiral or multiplicity of concentric tracks with a track spacing of approximately 2 microns. The disc is both written and read by a beam of laser light focussed to a spot of about 1 micron at the disc surface. In the write mode the high energy laser light is such as to form the pits and in the read mode the relatively lower energy laser light is such as to read data corresponding to the detection of successive pits as the disc rotates. A reflected beam is monitored and from this, information that has been recorded is derived.

Two types of discs are currently most common. One type, known as a sealed disc assembly, has a central hub and outer circumferential ring between which two layers, a recording layer, typically of 2.5 millimeters thick aluminum and a cover sheet of Mylar (registered trademark) or other plastic material are stretched taut. Separation of the sheets is ensured by spacers and by tensioning the cover sheet. Tension must be uniform in order that the cover sheet is not birefringent. The cover sheet must also be of uniform thickness and high stability. If the cover sheet does not have these properties then read light which is directed through the cover sheet to be focussed at the data surface is sensitive to polarization direction and the focussed spot tends to oscillate in position and possibly change size as the disc rotates.

In another example of optical disc, a cover film typically of polymethacrylate of a thickness approximately 1000 microns overlies and directly contacts the recording surface of the disc. Other examples of optical recording discs are known but most of those currently used have a protective layer either directly contacting, or spaced from, the memory recording surface of the disc.

One of the requirements for using an optical disc as a high density memory storing typically 2 gigabytes on a 30 centimeter outer diameter disc, is that the stored data should be accessed as quickly as possible. For a disc of this size, an acceptable access time for translating a read beam from a rest position to a designated read position to commence reading the stored data is 100 milliseconds. To ensure a fast access time, an accurate and rapid servo system is required so that from the moment that movement of the read beam commences, the position and velocity of the read beam is accurately monitored and required subsequent movement to read the target data is continuously and accurately predicted.

An obvious aid to such a servo system which has been used in prior discs are the spiral or concentric tracks within which the data is stored.

In one access scheme several of the tracks are marked for example with repeated, position-characteristic header data or address fields so that as the scanning beam traverses the disc with a radial component the header data within the marked tracks is monitored. To access a track between any two successive marked tracks, the intervening tracks are simply counted as the decelerating scanning head moves across them. As the scanning beam nears the target track, the rate at which the scanning beam crosses the tracks is reduced still further and eventually the scanning head is halted at the target track to read the target data. The data as well as being in a prerecorded track or radial position is also in a predetermined arc of that track and it is important therefore to know where the disc is circumferentially relative to the scanning beam. To do this in known discs, each track has a data sequence indicative of a circumferential index position on the disc.

The scanning beam is also used to derive other information from the disc. Most importantly, it must read the memory data. It must also ensure that the scanning beam itself remains on track as long as it is required there. It must ensure too that the scanning beam is focussed at the surface of the track in order accurately to monitor light variations corresponding to memory and position related data.

As indicated previously, the memory and position control data is typically recorded as a succession of pits and lands along each track, the pits and lands causing a certain change in monitored light as the disc rotates underneath the scanning beam. The monitored change may be a change in reflectivity, scattering, or diffraction pattern.

Clearly, any part of the data recording surface used for storing position indicating information cannot be used for storing memory data. Moreover, the high density storage although ideally suited to recording data for memory purposes, is not particularly adapted to provide position related information to a servo system used to control the scanning beam. For the latter purpose, positional data bits which are more gross and less densely packed than the memory data bits would be more suitable.

According to one aspect of the invention, there is provided an optical disc for use in optical memories, the disc having a protective cover, a memory data recording surface, and a positional information recording surface, the positional data recording surface being a surface of the protective cover.

The positional information can be recorded optically or magnetically on the protective cover.

Depending on the function of the positional information, it can occupy predetermined areas of the protective cover. For example a cover can have high density encoder marks and relatively lower density sector marks extending around the disc near the disc circumference, the sector band including a unique index mark. The disc can also have a series of coarse track marks radially inwardly of the sector mark bands the coarse track marks occupying an area substantially overlying a read/write zone of the memory data recording surface. Radially inside the coarse track marks, the cover can have a reference or closure track and disc indentity data.

In particular the unique index mark can provide a circumferential start position from which sector marks signifying the circumferential start position of data packets can be referenced. The rate at which an encoder scanning beam traverses the more densely positioned encoder marks can be used to compensate for variation in disc rotational speed. The track marks overlying the read/write zone can be used for monitoring and controlling movement of the read beam in a radial direction. The inside reference track can be used to ensure that a blank disc, i.e. one containing no memory data, is accurately centered before data is written on a first track. The closure track thus acts as a reference to ensure that memory data is not eccentrically loaded on the disc. The identity mark can be a simple bar code to differentiate the particular disc from others.

The positional information can be optically recorded on the cover surface in any of a number of ways. Firstly, it can be a series of dark and light areas produced for example by selectively printing a dark film on the cover. When the positional data scanning beam traverses the disc the positional data is monitored as successive changes in reflectivity. The reflectivity of the cover sheet must not however, vary by more than 2% otherwise the transmission of the memory surface scanning beam is non-uniformly affected with the attendant risk of reading memory data incorrectly.

Secondly the data can be a series of rough and smooth areas produced for example by selectively etching the cover sheet through a mask. When the positional data scanning beam traverses the disc, the positional data is monitored as successive changes in scattering.

Thirdly, the data can be a series of pits and lands produced again by etching. When the positional data scanning beam traverses the disc, the positional data is monitored as successive changes in diffraction pattern. Typically the positional information on the cover is recorded as linear elements of the order of 50 microns wide. A magnetically encoded protective cover surface can have adjacent regions of high and low levels of magnetization.

In using the disc, at least one positional data scanning beam is used which is distinct from the scanning beam used to read the memory data at the recording surface. Because the scanning beams are focussed at different levels and at different lateral positions and because the data bits which they read are an order of magnitude different is size, then light which is reflected from the memory surface into the positional data channel, and light reflected from the positional surface which is reflected into the memory data channel, does not cause error.

The positional information recording surface is preferably the outer surface of the protective cover although it could be the cover inner surface. Because positional information at the cover surface is relatively more gross and less densely positioned than the memory data at the memory data recording surface, then the outer protective surface of the disc may have dust or contaminants adhering to it without incurring error.

One method of recording the positional information is by photolithography to produce regions which are relatively dark.

In another alternative particularly for an optical disc formed with a protective film contacting the memory data recording surface, the film can be embossed using a master disc negative.

Finally for magnetically encoding the protective cover a surface pattern can be printed onto selected regions of the cover as an optically transparent layer of iron oxide.

An embodiment of the invention will now be described by way of example, with reference to the accompanying drawings, in which:-

Figure 1 is a cross-section, not-to-scale, through part of an optical disc according to the invention;

Figure 2 is a schematic plan view of part of a cover for the Figure 1 disc; and

Figure 3 is a block schematic view of a control system for use with the optical disc of the present invention.

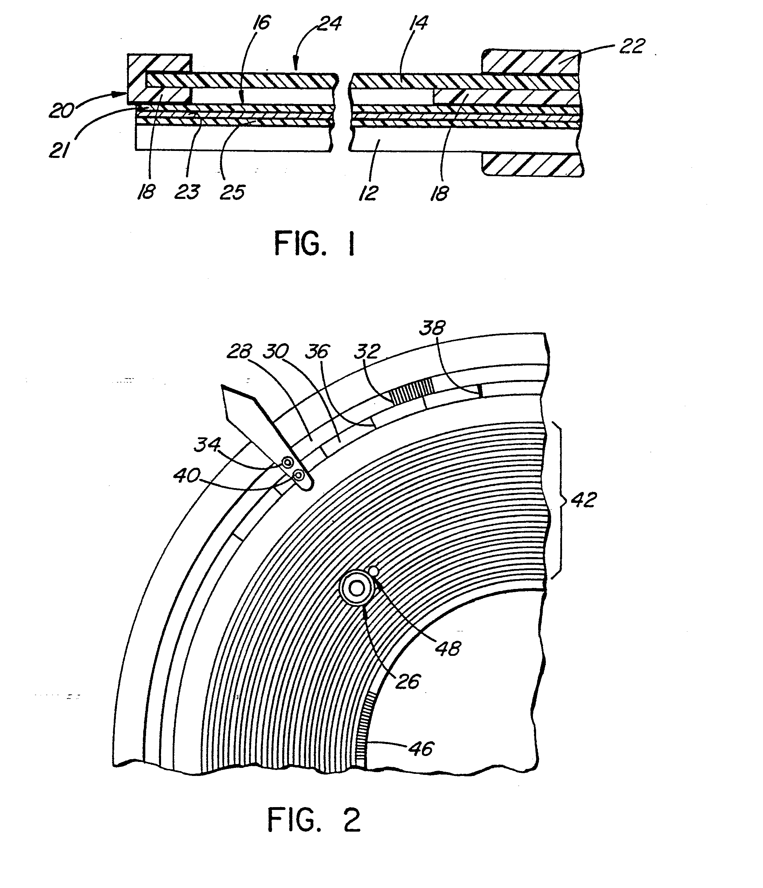

Referring to Figure 1 in detail, there is shown an optical disc assembly 10 for use as an optical memory. The assembly has a 30 centimeter diameter, 2.5 millimeter thick disc 12 of aluminum. Overlying the disc is a cover sheet 14 of Mylar (registered trademark) which functions to protect a memory recording surface 16 of the underlying disc 12 from dust and contaminants. The 100 micron thick layer 14 and the aluminum recording disc 12 are spaced apart by spacers 18 and are uniformly tensioned between a metal rim 20 and a central hub 22.

Over an exposed outer surface 24 of the protective cover 14 is distributed positional data and over the protected upper surface 16 of the aluminum disc 12 is stored memory data. The memory data consists of a series of pits and intervening lands, the pits being formed along concentric tracks typically 1 micron across and of 1½ micron spacing. In contrast, the positional information on the cover exists as a series of printed marks of about 50 micron width.

To write on a blank disc, that is, to form the pits within the memory surface, the disc is rotated on a turntable under a write head (not shown). The write head includes a 10 mW GaAs diode laser which is driven to provide 50 to 100 nanosecond pulses. Light from the laser is focussed at the memory surface of the disc and is guided to the desired radial position on the disc by an optomechanical drive. Then at the selected angular position of the disc, the diode laser is energized momentarily. The action of the laser beam is locally to displace regions of an optically active film 21 on the substrate to create a pit about 1 micron across and 50 nanometers deep, the displaced material being partly relocated and partly vapourized. The optically active film 21 is a 150 nanometer dye polymer layer which overlies firstly a 40 nanometer aluminum reflecting layer 23 and secondly a 1000 nanometer plastics smoothing layer 25. The diode laser is driven on and off in accordance with a digital data signal when the laser beam is focussed at a selected region of the disc memory surface.

The encoded data at the disc surface is subsequently read using a read head shown generally as 26 in Figure 2. The read head has a lower power laser, typically a helium-neon laser with an output wavelength of 633 nanometers and continuous wave power of ½ megawatts. The digitally encoded signal is monitored by analyzing the change in diffraction pattern of diffracted light as the discontinuity corresponding to the boundary of a pit passes under the read beam. Other read out methods can be used depending on the type of optically active film which is used.

Particularly for use in high density optical memories in which typically more than 2 gigabytes are stored in a 30 centimeter outer diameter disc, there is a need to access a selected piece of information on the memory surface 16 quickly and accurately. To access such information, the optical read head 26 moves radially outward from a reference position as the disc assembly 10 rotates beneath the head. Simultaneously, positional data is read from the disc assembly and processed to ensure that the read head moves quickly towards a position at which the target item of data can be read.

By this invention, the positional information is mainly or wholly encoded on the surface 24 of the protective cover 14 and not on the memory encoding surface 16 as is common in known systems.

In the embodiment shown in Figures 1 and 2, the information is encoded optically as variations in surface reflectivity of the protective cover. As shown in the plan view of Figure 2 the positional data occupies a number of zones. Firstly there are two series of optical encoding radial marks occupying bands 28 and 30 of about 0.1 millimeter width at the outer edge of the cover. The first band 28 has 5,000 marks 32. A fixed positional reader 34 is used to count the rate at which the marks pass under it in order to regulate the disc speed. Radially within this band is a second band 30, the sector mark band, the sector marks 36 indicating the position of address or header data within the encoded data within the memory surface. Typically the sector mark band has 128 marks one of which is a primary index mark 38. A second fixed positional reader 40 is used to monitor sector data.

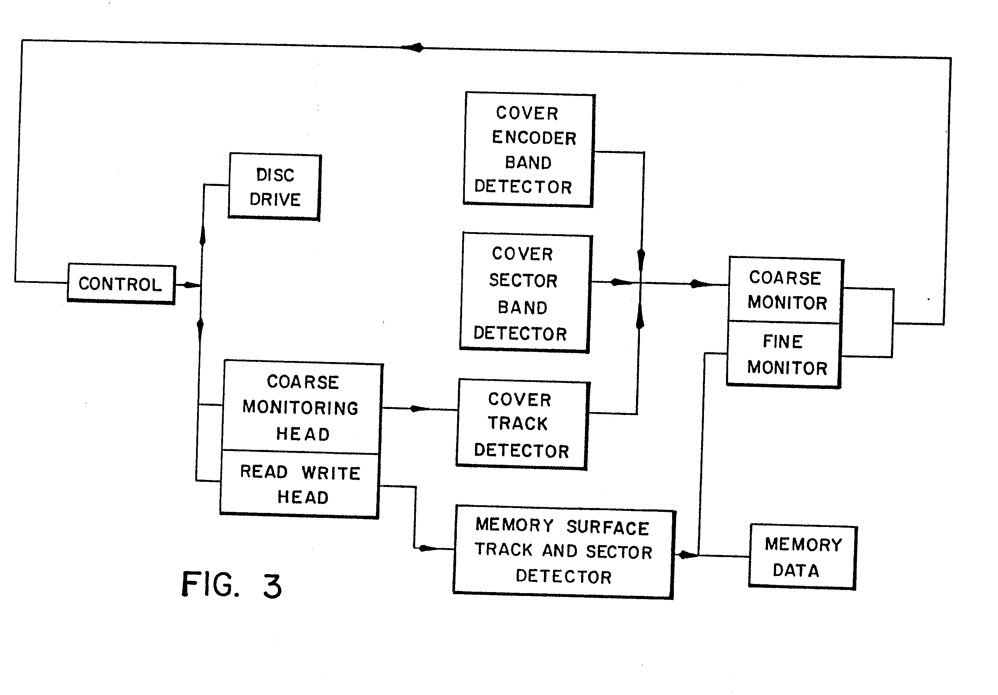

Inside this band is a third band 42 substantially in vertical registration with a read/write area of the underlying memory surface 16. For the 30 centimeter disc there are 300 tracks within this band, the 300 tracks corresponding to 30,000 tracks on the underlying memory surface. Radially inward of this band is a reference band which includes firstly, a closure track 44 and

0142927

secondly, disc identifying data 46. The closure track is used following positioning of the disc assembly on a turntable to assess whether closure of data tracks can be expected. If the disc assembly is eccentrically positioned then the extent of this is monitored and, if it is too great for the memory read head 26 to compensate for, then the disc is repositioned using the centering hub 22. The identifying data 46 is recorded simply as a bar code individual elements of which extend radially, the code itself extending circumferentially. The third band 42 and the reference band containing the closure track 44 and identifying bar code are read by a coarse track read head 48 which shares a common mechanical drive with the memory read head but has a distinct optical system. The read head 48 has a rest position adjacent the center of the disc assembly. In this position, the corresponding scanning beam monitors the identifying bar code and the closure track for assessing disc identity and eccentricity. Then when an item of data at the memory surface is to be accessed, the two heads 26 and 48 move radially outwards at high speed with the control system of Figure 3 being actuated.

As previously indicated the optical encoding on the protective cover 14 takes the form of periodic variations in reflectivity. To obtain this, a pattern is printed on the top surface of the cover using photolithography. The printed material is a developed photoresist which is compatible with Mylar, is highly stable and abrasion resistant. The film is less than 10 microns thick to produce a contrast in reflectivity compared to the unprinted Mylar of less than 2%. A low contrast is important since if contrast is too high, then accuracy of reading of the memory data can be detrimentally affected. As an alternative to developing a photoresist film through a mask, the pattern may be screen printed.

As an alternative to printing onto the top surface of the cover sheet, selected regions of the cover sheet can instead be roughened to cause a variation in scattering of a positional read beam. In this case a mask is formed over the protective cover, the cover sheet is etched by sputtering or reactive ion etching through the windows of the mask, and then the mask is removed.

In yet another alternative the cover sheet can alternatively be scribed with a needle such as a phonograph type diamond stylus.

For a disc which, in contrast to that described in Figures 1 and 2, has a thick film typically of polymethyl methacrylate in contact with the memory surface, the positional data on the cover surface can be formed by embossing. To do this a master disc is formed by scribing a copper sheet and then nickel plating the scribed surface. The master disc is then pressed onto the film of polymethyl methacrylate after heating to render the film deformable. This technique is well known in the production of phonograph records.

As an alternative to optically encoding the positional data on the cover, the cover can be coated with a magnetic film which is subsequently encoded, the magnetic film being composed of iron oxide particles dispersed in a binder that produces complete bonding to the film support. Such a film which is transparent and less than 8 microns thick is used, for example, by Eastman Kodak Company, of Rochester, New York on their Data Kode Film.

0142927

Referring to Figure 3 there is shown in schematic form a control system for use with the disc of Figures 1 and 2. Essentially in use when accessing an item of data, positional data on the disc cover is initially used to obtain a coarse evaluation of the actual position and movement of the physically combined read/write and coarse monitoring heads so that the required movement of the read/write head to access the data item can be predicted. Then as the read/write head gets closer to the selected item the coarse monitoring system is switched out and a fine, high resolution monitoring system using the data channel from the memory surface is utilized. As shown in Figure 3 the encoder band and the sector band on the cover are also monitored and the information obtained is used respectively to control the disc drive and the timing of data writing and reading at the memory surface by the read/write head.

Details of the monitoring and control system are not shown since they exist in known optical disc monitoring and control systems in which control of read/write head movement is based on positional data present on the memory recording surface. However it will be recognized that a monitoring system used to obtain track crossing data from the protective cover is not so complex nor so difficult to set up as one for obtaining data from the memory surface. Thus the former need not have such an accurate beam focussing mechanism. In addition a relatively slow counter can be used since track crossing is relatively slow. Lastly, data analysing circuitry need not be so complex since there is little risk of confusing the identity of radially adjacent tracks on the cover.

Multilayered optical discs have been proposed by for example, Thompson - CSF. However, these known discs differ from the currently proposed disc in that the multiple recording surfaces are of the same type, the recorded data at each surface consists of a combination of positional and memory data, and the data at the several surfaces is encoded at the same bit density.

It will be recognized that whereas in the embodiment described, positional information is recorded only on the protective cover and not at all on the memory data surface, the positional data could alternatively be distributed between the two surfaces.

**0142927**

Claims:-

1. An optical disc having a protective cover, the disc having a memory data recording surface, characterized in that a surface of the protective cover 14 is a positional data recording surface 24.

2. An optical disc as claimed in claim 1 further characterized in that the positional data is recorded optically.

3. An optical disc as claimed in claim 1 further characterized in that the positional data is recorded magnetically.

4. An optical disc as claimed in claim 1 further characterized in that the surface of the protective cover 14 is an exposed top surface thereof.

5. An optical disc as claimed in claim 1 further characterized in that the data on the memory data recording surface 16 and the positional data recording surface 24 is digitally encoded.

6. An optical disc as claimed in claim 4 further characterized in that the bit size of data on the positional data recording surface 24 is substantially larger than the bit size of memory data on the memory data recording surface 16.

7. An optical disc as claimed in claim 4 further **0142927** characterized in that the bit density of data on the positional data recording surface 24 is substantially lower than the bit density of memory data on the memory data recording surface 16.

8. An optical disc as claimed in claim 1 further characterized in that the positional data consists of a series of linear or curvilinear marks between 20 microns and 70 microns in width.

9. An optical disc as claimed in claim 7 further characterized in that the marks are relatively light absorbing printed regions on a top surface 24 of the protective cover 14.

10. An optical disc as claimed in claim 7 further characterized in that the marks are relatively rough regions formed within the protective cover 14 at a surface thereof.

11. An optical disc as claimed in claim 7 further characterized in that the marks are embossed regions of the cover 14.

12. An optical disc as claimed in claim 1 further characterized in that the protective cover 14 is spaced from the memory data recording surface 16.

**0142927**

13. An optical disc as claimed in claim 1 further characterized in that the protective cover is a film in intimate contact with the memory data recording surface 16.

14. An optical disc as claimed in claim 1 further characterized in that the data at the positional data recording surface 24 is distributed into a variety of fields, an outer radial field, a central radial field and an inner radial field.

15. An optical disc as claimed in claim 13 further characterized in that the central field consists of a number of concentric tracks separated by a distance of the order of 200 microns.

16. An optical disc as claimed in claim 13 further characterized in that the outer region has a first outer band having a number of radially extending marks greater in number than 3,000 and an immediately adjacent band having a plurality of sector marks the sector mark spacing corresponding to the disposition of header data throughout the memory data recording surface 16.

17. An optical disc as claimed in claim 13 further characterized in that the inner field contains a closure track and a radially extending identifying bar code.

0142927

18.   An optical disc system for use with a disc as claimed in claim 1 the optical disc system having a first read means for reading the memory data and a second read means for reading the positional data.

19.   An optical disc system as claimed in claim 18, said first and second read means operable to develop separate scanning beams.

0142927

FIG. 1

FIG. 2

0142927

FIG. 3